# EUROPÄISCHE PATENTANMELDUNG

(11) **EP 1 798 446 A1**
(43) Veröffentlichungstag der Anmeldung: **20.06.2007**
(21) Anmeldenummer: 06024871.3
(22) Anmeldetag: 01.12.2006
(51) Int. Cl.: F16H 45/02

(54) **Drehmomentübertragungseinrichtung**

(30) Priorität: 17.12.2005 DE 102005060566
(71) Anmelder: LuK Lamellen und Kupplungsbau Beteiligungs KG, 77815 Bühl (DE)
(72) Erfinder: Maienschein, Stephan, 76534 Baden-Baden (DE); Meisner, Marc, 77815 Bühl-Weitenung (DE)

(57) **Zusammenfassung**

Drehmomentübertragungseinrichtung mit einer im Antriebsstrang (1) eines Kraftfahrzeugs zur Drehmomentübertragung zwischen einer Antriebseinheit (3) und einem Getriebe (5) angeordneten Nabe (22), insbesondere einer Turbinenradnabe eines Turbinenrads (21) eines Drehmomentwandlers (6), die unter Zwischenschaltung eines Drehschwingungsdämpfers (27) über eine Mitnehmerscheibe insbesondere einer Wandlerüberbrückungskupplung mit einer Dämpfernabe gekoppelt ist.

Der Drehschwingungsdämpfer (27) ist mit einer mechanischen Anschlageinrichtung ausgestattet, die wirksam wird, sobald eine auslegungsgemäße Maximalbelastung des Drehschwingungsdämpfers überschritten wird.

## Beschreibung

Die Erfindung betrifft eine Drehmomentübertragungseinrichtung mit einer im Antriebsstrang eines Kraftfahrzeugs zur Drehmomentübertragung zwischen einer Antriebseinheit und einem Getriebe angeordneten Nabe, insbesondere einer Turbinenradnabe eines Turbinenrads eines Drehmomentwandlers, die unter Zwischenschaltung eines Drehschwingungsdämpfers über eine Mitnehmerscheibe insbesondere einer Wandlerüberbrückungskupplung mit einer Dämpfernabe gekoppelt ist.

Aufgabe der Erfindung ist es, eine Drehmomentübertragungseinrichtung gemäß dem Oberbegriff des Anspruchs 1 zu schaffen, die eine höhere Lebensdauer als herkömmliche Drehmomentübertragungseinrichtungen aufweist.

Die Aufgabe ist bei einer Drehmomentübertragungseinrichtung mit einer im Antriebsstrang eines Kraftfahrzeugs zur Drehmomentübertragung zwischen einer Antriebseinheit und einem Getriebe angeordneten Nabe, insbesondere einer Turbinenradnabe eines Turbinenrads eines Drehmomentwandlers, die unter Zwischenschaltung eines Drehschwingungsdämpfers über eine Mitnehmerscheibe insbesondere einer Wandlerüberbrückungskupplung mit einer Dämpfernabe gekoppelt ist, dadurch gelöst, dass der Drehschwingungsdämpfer mit einer mechanischen Anschlageinrichtung ausgestattet ist, die wirksam wird, sobald eine auslegungsgemäße Maximalbelastung des Drehschwingungsdämpfers überschritten wird. Das liefert den Vorteil, dass der Drehschwingungsdämpfer wirksam gegen Überlast geschützt wird. Als Überlast ist dabei jede Belastung anzusehen, welche die auslegungsgemäße Dämpferkapazität übersteigt. Der Schutz der mechanischen Anschlageinrichtung betrifft die Kraft übertragenden Komponenten des Dämpfers, und zwar einschließlich der federnden Elemente, die in dem Dämpfer wirksam sind.

Ein bevorzugtes Ausführungsbeispiel der Drehmomentübertragungseinrichtung ist dadurch gekennzeichnet, dass die Anschlageinrichtung Anschlagfinger umfasst, die von der Mitnehmerscheibe ausgehen und jeweils in einen Zwischenraum hineinragen, der in Umfangsrichtung von zwei Anschlagbegrenzungselementen begrenzt wird, die an der Dämpfernabe vorgesehen sind. Über die Abstände in Umfangsrichtung zwischen den Anschlagfingern und den zugehörigen Anschlagbegrenzungselementen kann der maximale Verdrehwinkel zwischen der Mitnehmerscheibe und der Dämpfernabe eingestellt werden.

Ein weiteres bevorzugtes Ausführungsbeispiel der Drehmomentübertragungseinrichtung ist dadurch gekennzeichnet, dass sich die Anschlagfinger in radialer Richtung von einer zentralen Öffnung in der Mitnehmerscheibe nach innen erstrecken. Dadurch kann Bauraum in axialer Richtung eingespart werden.

Ein weiteres bevorzugtes Ausführungsbeispiel der Drehmomentübertragungseinrichtung ist dadurch gekennzeichnet, dass sich die Anschlagbegrenzungselemente von der Dämpfernabe in axialer Richtung erstrecken. Die Anschlagbegrenzungselemente haben vorzugsweise die Gestalt von Kreisbögen.

Ein weiteres bevorzugtes Ausführungsbeispiel der Drehmomentübertragungseinrichtung ist dadurch gekennzeichnet, dass mehrere Anschlagfinger gleichmäßig über einen Umfang der Mitnehmerscheibe verteilt angeordnet sind. Vorzugsweise sind mindestens vier Anschlagfinger gleichmäßig über einen Umfang der Mitnehmerscheibe verteilt angeordnet.

Ein weiteres bevorzugtes Ausführungsbeispiel der Drehmomentübertragungseinrichtung ist dadurch gekennzeichnet, dass die Anschlagfinger in Umfangsrichtung jeweils zwischen zwei Kopplungselementen angeordnet sind, die von der Nabe ausgehen. Die Kopplungselemente dienen dazu, die Mitnehmerscheibe drehfest mit der Nabe zu verbinden. Dadurch wird erreicht, dass Überlasten von der Nabe über die Anschlagfinger der Mitnehmerscheibe direkt in die Dämpfernabe eingeleitet werden.

Ein weiteres bevorzugtes Ausführungsbeispiel der Drehmomentübertragungseinrichtung ist dadurch gekennzeichnet, dass sich die Kopplungselemente von der Nabe in axialer Richtung erstrecken. Die Kopplungselemente haben vorzugsweise die Gestalt von Kreisbögen.

Ein weiteres bevorzugtes Ausführungsbeispiel der Drehmomentübertragungseinrichtung ist dadurch gekennzeichnet, dass sich zwischen zwei Anschlagfingern jeweils ein Kopplungsfinger von der Mitnehmerscheibe in radialer Richtung nach innen erstreckt. Die Kopplungsfinger ermöglichen eine gute Kraftverteilung.

Ein weiteres bevorzugtes Ausführungsbeispiel der Drehmomentübertragungseinrichtung ist dadurch gekennzeichnet, dass die Kopplungsfinger in Umfangsrichtung jeweils zwischen zwei Kopplungselementen angeordnet sind, die von der Nabe ausgehen. Die Kopplungsfinger sind kürzer als die Anschlagfinger und erstrecken sich nicht in die Zwischenräume hinein, die in Umfangsrichtung jeweils von zwei Anschlagbegrenzungselementen begrenzt werden, die an der Dämpfernabe vorgesehen sind.

Ein weiteres bevorzugtes Ausführungsbeispiel der Drehmomentübertragungseinrichtung ist dadurch gekennzeichnet, dass an der Dämpfernabe ein Dämpfernabenflansch befestigt ist. Die zweiteilige Ausführung mit Dämpfernabe und Dämpfernabenflansch ermöglichen es, die beiden Teile bei der Herstellung der Verbindung des Dämpfernabenflanschs mit der Dämpfernabe den maximalen Verdrehwinkel des Dämpfers einzustellen. Somit können, anders als bei bisher bekannten Lösungen, allein durch Variation der Federelemente und ohne weitere geometrische Änderung von Dämpferkomponenten verschiedene Dämpfercharakteristiken, zum Beispiel das Drehmoment über dem Verdrehwinkel, erzeugt werden.

Ein weiteres bevorzugtes Ausführungsbeispiel der Drehmomentübertragungseinrichtung ist dadurch gekennzeichnet, dass der Dämpfernabenflansch stoffschlüssig mit der Dämpfernabe verbunden ist. Vorzugsweise ist der Dämpfernabenflansch durch eine Schweißverbindung, insbesondere eine Laserschweißverbindung, mit der Dämpfernabe verbunden. Die Schweißverbindung wird vorzugsweise erst nach dem Einstellen des maximalen Verdrehwinkels des Dämpfers hergestellt.

Weitere Vorteile, Merkmale und Einzelheiten ergeben sich aus der nachfolgenden Beschreibung, in der unter Bezugnahme auf die Zeichnung ein Ausführungsbeispiel im Einzelnen beschrieben ist. Es zeigen:
Figur 1 eine Drehmomentübertragungseinrichtung gemäß einem ersten Ausführungsbeispiel im Halbschnitt;
Figur 2 eine Mitnehmerscheibe mit einer Dämpfernabe und einer Turbinenradnabe der Drehmomentübertragungseinrichtung aus Figur 1 in der Draufsicht und
Figur 3 einen vergrößerten Ausschnitt aus Figur 2.

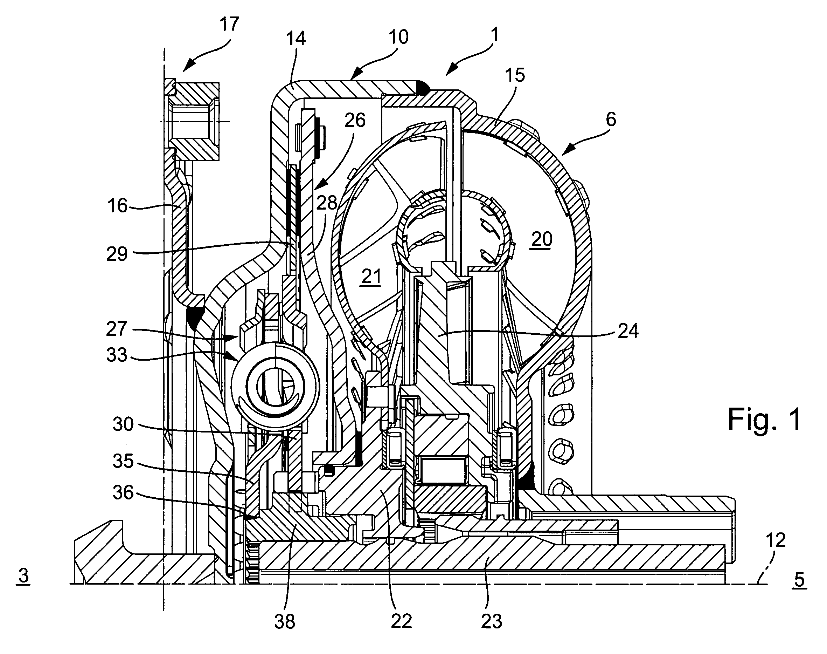

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle ausgeht, und einem Getriebe 5 ist ein hydrodynamischer Drehmomentwandler 6 angeordnet. Die Kurbelwelle der Brennkraftmaschine 3 ist zum Beispiel über ein Antriebsblech, das auch als flex plate bezeichnet wird, drehfest mit einem Gehäuse 10 des Drehmomentwandlers 6 verbunden.

Das Gehäuse 10 des Drehmomentwandlers 6 ist um eine Drehachse 12 drehbar und mit einer antriebsnahen Gehäusewand 14 und einer antriebsfernen Gehäusewand 15 ausgestattet. An der antriebsnahen Gehäusewand 14 ist mit Hilfe eines sich radial nach außen erstreckenden Verbindungsblechteils 16 ein Anlasserzahnkranz 17 befestigt. Die antriebsferne Gehäusewand 15 ist in eine Baueinheit mit einem Pumpenrad 20 des hydrodynamischen Drehmomentwandlers 6 zusammengefasst.

Zwischen dem Pumpenrad 20 und der antriebsnahen Gehäusewand 14 ist ein Turbinenrad 21 angeordnet, das mit Hilfe von Nietverbindungselementen an einer Turbinenradnabe 22 befestigt ist. Die Turbinenradnabe 22 ist drehbar zu einer Eingangswelle 23 des Getriebes 5 angeordnet. Zwischen dem Turbinenrad 21 und dem Pumpenrad 20 ist in bekannter Art und Weise ein Leitrad 24 angeordnet. Zwischen dem Turbinenrad 21 und der antriebsnahen Gehäusewand 14 ist ebenfalls in bekannter Art und Weise eine Wandlerüberbrückungskupplung 26 mit einem Drehschwingungsdämpfer 27 angeordnet. Die Wandlerüberbrückungskupplung 26 umfasst einen Kolben 28, der drehbar und axial verschiebbar radial außen auf der Turbinenradnabe 22 gelagert ist. Der Kolben 28 weist radial außen eine Reibfläche auf, die der Brennkraftmaschine 3 zugewandt und gegenüber einer weiteren Reibfläche angeordnet ist, die auf der der Brennkraftmaschine 3 abgewandten Seite der antriebsnahen Gehäusewand 14 vorgesehen ist. Zwischen den beiden Reibflächen ist eine Reiblamelle 29 angeordnet, die drehfest mit einer Mitnehmerscheibe 30 verbunden ist.

Die Mitnehmerscheibe 30 ist in bekannter Art und Weise unter Zwischenschaltung von Energiespeicherelementen 33, insbesondere von Bogenfedern, mit einem Dämpferflansch 35 des Drehschwingungsdämpfers 27 gekoppelt. Der Dämpferflansch 35 ist mit Hilfe einer Schweißverbindung 36 stoffschlüssig mit einer Dämpfernabe 38 verbunden. Die Dämpfernabe 38 wiederum ist radial innen drehfest mit einem Ende der Eingangswelle 23 des Getriebes 5 verbunden.

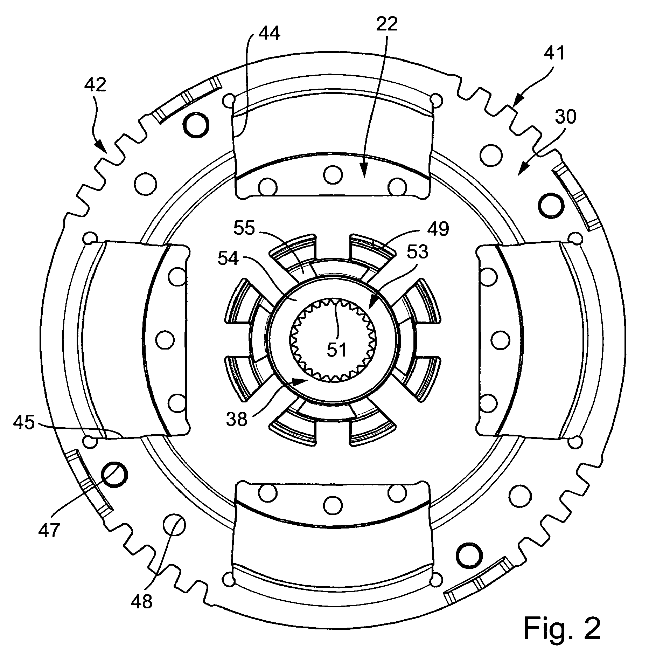

In Figur 2 sind die Turbinenradnaben 22, die Mitnehmerscheibe 30 und die Dämpfernabe 38 unter Weglassung der übrigen Teile in einer Draufsicht von der Antriebseinheit 3 her betrachtet, im zusammengebauten Zustand dargestellt. Die Mitnehmerscheibe 30 hat im Wesentlichen die Gestalt einer Kreisringscheibe. Radial außen weist die Mitnehmerscheibe 30 mehrere Verzahnungsbereiche 41, 42 auf. Die Verzahnungsbereiche 41, 42 dienen dazu, die Mitnehmerscheibe 30 drehfest, aber axial verschiebbar mit der Reiblamelle (29 in Figur 1) zu verbinden. Des Weiteren weist die Mitnehmerscheibe 30 vier gleichmäßig über den Umfang verteilte Fenster 44, 45 auf, die in bekannter Art und Weise zur Aufnahme der Energiespeicherelemente (33 in Figur 1) dienen. Darüber hinaus weist die Mitnehmerscheibe mehrere Durchgangslöcher 47, 48 auf, die zum Beispiel zum Durchführen von Nietverbindungselementen dienen. Radial innen weist die Mitnehmerscheibe 30 ein zentrales Durchgangsloch 49 auf, das auch als Öffnung bezeichnet wird.

Die Dämpfernabe 38 ist konzentrisch zu der Mitnehmerscheibe 30 und teilweise in dem zentralen Durchgangsloch 49 angeordnet. Radial innen ist die Dämpfernabe 38 mit einer Innenverzahnung 51 ausgestattet. Die Innenverzahnung 51 ist innen an einem im Wesentlichen rohrförmigen Dämpfernabenkörper 53 ausgebildet, von dem in Figur 2 eine Ringfläche 54 sichtbar ist. Radial außerhalb der Ringfläche 54 und konzentrisch zu dieser weist die Dämpfernabe 38 eine weitere Ringfläche 55 auf. Allerdings ist die weitere Ringfläche 55 in axialer Richtung zu der Ringfläche 54 versetzt angeordnet. In der gezeigten Ansicht ist die weitere Ringfläche 55 gegenüber der Ringfläche 54 in die Papierebene hinein versetzt.

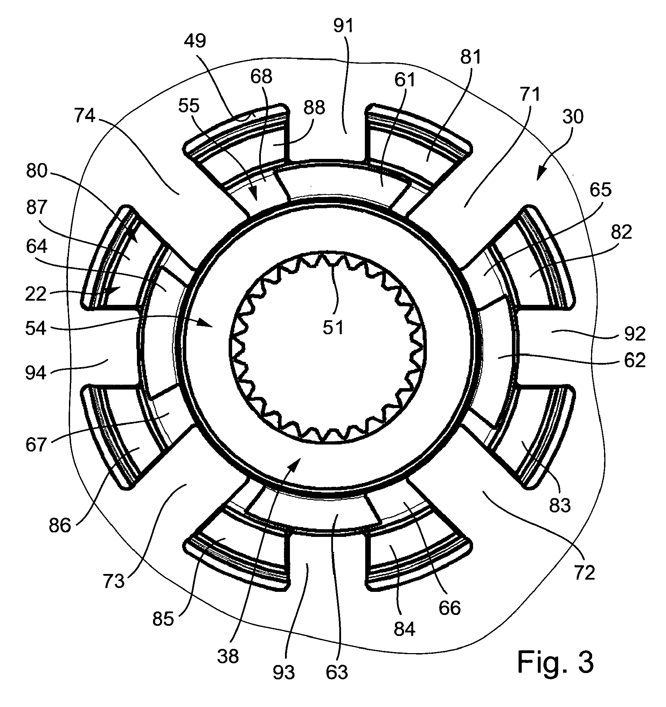

In Figur 3 ist der zentrale Abschnitt der Mitnehmerscheibe 30 und der Turbinenradnabe 22 aus Figur 2 mit der Dämpfernabe 38 vergrößert dargestellt. Von der Ringfläche 55 der Dämpfernabe 38 erstrecken sich vier Anschlagbegrenzungselemente 61 bis 64 in axialer Richtung. Die vier Anschlagbegrenzungselemente 61 bis 64 haben jeweils die Gestalt eines Kreisbogens und sind gleichmäßig über den Umfang der Ringfläche 55 verteilt. Zwischen zwei Anschlagbegrenzungselementen 61, 62; 62, 63; 63, 64; 64, 61 ist jeweils ein im Wesentlichen kreisbogenförmiger Zwischenraum 65, 66, 67, 68 ausgespart. In die Zwischenräume 65 bis 68 ragt jeweils ein Anschlagfinger 71 bis 74, der sich von dem zentralen Durchgangsloch 49 der Mitnehmerscheibe 30 in radialer Richtung erstreckt. Die Anschlagfinger 71 bis 74 sind einstückig mit der Mitnehmerscheibe 30 verbunden und gleichmäßig über den Umfang des Durchgangslochs 49 verteilt. Durch die Abstände in Umfangsrichtung zwischen den Anschlagfingern 71 bis 74 und den zugehörigen Anschlagbegrenzungselementen 61 bis 64 wird die Größe des relativen Verdrehwinkels zwischen der Mitnehmerscheibe 30 und der Dämpfernabe 38 festgelegt.

Die Turbinenradnabe 22 weist radial außerhalb der und konzentrisch zu den Ringflächen 54, 55 der Dämpfernabe 38 eine Ringfläche 80 auf, von der sich acht Kopplungselemente 81 bis 88 in axialer Richtung erstrecken. Die Kopplungselemente 81 bis 88 haben jeweils die Gestalt von Kreisbögen und sind gleichmäßig über den Umfang der Ringfläche 80 verteilt. Zwischen den Kopplungselementen 81, 82; 83, 84; 85, 86; 87, 88 erstreckt sich jeweils ein Anschlagfinger 71 bis 74 hindurch. Darüber hinaus ist zwischen zwei Kopplungselementen 88, 81; 82, 83; 84, 85; 86, 87 jeweils ein Kopplungsfinger 91 bis 94 angeordnet, der sich von der Mitnehmerscheibe 30 in radialer Richtung erstreckt. Die Kopplungsfinger 91 bis 94 sind im Wechsel mit den Anschlagfingern 71 bis 74 über den Umfang des zentralen Durchgangslochs 49 der Mitnehmerscheibe 30 gleichmäßig verteilt angeordnet. Allerdings sind die Kopplungsfinger 91 bis 94 kürzer als die Anschlagfinger 71 bis 74 ausgeführt. Dadurch wird erreicht, dass die Kopplungsfinger 91 bis 94 nicht in die Dämpfernabe 38 eingreifen, sondern radial außen an jeweils einem Anschlagbegrenzungselement 61 bis 64 anliegen. Die Kopplungsfinger 91 bis 94 und die Anschlagfinger 71 bis 74 dienen auch dazu, die Mitnehmerscheibe 30 auf der Dämpfernabe 38 zu zentrieren.

Der mechanische Anschlag kann, wie gezeigt, in zwei Verdrehrichtungen genutzt werden. Es besteht aber auch die Möglichkeit, den mechanischen Anschlag nur in eine Verdrehrichtung zu nutzen. In diesem Fall wird eine Last in der anderen Verdrehrichtung durch einen weiteren mechanischen Anschlag, zum Beispiel innerhalb des Dämpfers, aufgenommen.

### Bezucgszeichenliste

- 1.: Antriebsstrang
- 3.: Antriebseinheit
- 5.: Getriebe
- 6.: Drehmomentwandler
- 10.: Gehäuse
- 12.: Drehachse
- 14.: Gehäusewand
- 15.: Gehäusewand
- 16.: Verbindungsblechteil
- 17.: Anlasserzahnkranz
- 20.: Pumpenrad
- 21.: Turbinenrad
- 22: Turbinenradnabe
- 23.: Eingangswelle
- 24.: Leitrad
- 26.: Wandlerüberbrückungskupplung
- 27.: Drehschwingungsdämpfer
- 28.: Kolben
- 29.: Reiblamelle
- 30.: Mitnehmerscheibe
- 33.: Energiespeicherelement
- 35.: Dämpferflansch
- 36.: Schweißverbindung
- 38.: Dämpfernabe
- 41.: Verzahnungsbereich
- 42.: Verzahnungsbereich
- 44.: Fenster
- 45.: Fenster
- 47.: Durchgangsloch
- 48.: Durchgangsloch
- 39.: Durchgangsloch
- 51.: Innenverzahnung
- 53.: Dämpfernabenkörper
- 54.: Ringfläche
- 55.: Ringfläche
- 61.: Anschlagbegrenzungselement
- 62.: Anschlagbegrenzungselement
- 63.: Anschlagbegrenzungselement
- 64.: Anschlagbegrenzungselement
- 65.: Zwischenraum
- 66.: Zwischenraum
- 67.: Zwischenraum
- 68.: Zwischenraum
- 71.: Anschlagfinger
- 72.: Anschlagfinger
- 73.: Anschlagfinger
- 74.: Anschlagfinger
- 80.: Ringfläche
- 81.: Kopplungselement
- 82.: Kopplungselement
- 83.: Kopplungselement
- 84.: Kopplungselement
- 85.: Kopplungselement
- 86.: Kopplungselement
- 86.: Kopplungselement
- 88.: Kopplungselement
- 91.: Kopplungsfinger
- 92.: Kopplungsfinger
- 93.: Kopplungsfinger
- 94.: Kopplungsfinger

## Patentansprüche

1. Drehmomentübertragungseinrichtung mit einer im Antriebsstrang (1) eines Kraftfahrzeugs zur Drehmomentübertragung zwischen einer Antriebseinheit (3) und einem Getriebe (5) angeordneten Nabe (22), insbesondere einer Turbinenradnabe eines Turbinenrads (21) eines Drehmomentwandlers (6), die unter Zwischenschaltung eines Drehschwingungsdämpfers (27) über eine Mitnehmerscheibe (30) insbesondere einer Wandlerüberbrückungskupplung (26) mit einer Dämpfernabe (38) gekoppelt ist, **dadurch gekennzeichnet, dass** der Drehschwingungsdämpfer (27) mit einer mechanischen Anschlageinrichtung ausgestattet ist, die wirksam wird, sobald eine auslegungsgemäße Maximalbelastung des Drehschwingungsdämpfers (27) überschritten wird.

2. Drehmomentübertragungseinrichtung nach Anspruch 1, **dadurch gekennzeichnet, dass** die Anschlageinrichtung Anschlagfinger (71-74) umfasst, die von der Mitnehmerscheibe (30) ausgehen und jeweils in einen Zwischenraum (65-68) hineinragen, der in Umfangsrichtung von zwei Anschlagbegrenzungselementen (61-64) begrenzt wird, die an der Dämpfernabe (38) vorgesehen sind.

3. Drehmomentübertragungseinrichtung nach Anspruch 2, **dadurch gekennzeichnet, dass** sich die Anschlagfinger (71-74) in radialer Richtung von einer zentralen Öffnung (49) in der Mitnehmerscheibe (30) nach innen erstrecken.

4. Drehmomentübertragungseinrichtung nach Anspruch 2 oder 3, **dadurch gekennzeichnet, dass** sich die Anschlagbegrenzungselemente (61-64) von der Dämpfernabe (38) in axialer Richtung erstrecken.

5. Drehmomentübertragungseinrichtung nach einem der Ansprüche 2 bis 4, **dadurch gekennzeichnet, dass** mehrere Anschlagfinger (71-74) gleichmäßig über einen Umfang der Mitnehmerscheibe (30) verteilt angeordnet sind.

6. Drehmomentübertragungseinrichtung nach einem der Ansprüche 2 bis 5, **dadurch gekennzeichnet, dass** die Anschlagfinger (71-74) in Umfangsrichtung jeweils zwischen zwei Kopplungselementen (81-88) angeordnet sind, die von der Nabe (22) ausgehen.

7. Drehmomentübertragungseinrichtung nach Anspruch 6, **dadurch gekennzeichnet, dass** sich die Kopplungselemente (81-88) von der Nabe (22) in axialer Richtung erstrecken.

8. Drehmomentübertragungseinrichtung nach einem der Ansprüche 2 bis 7, **dadurch gekennzeichnet, dass** sich zwischen zwei Anschlagfingern (71-74) jeweils ein Kopplungsfinger (91-94) von der Mitnehmerscheibe (30) in radialer Richtung nach innen erstreckt.

9. Drehmomentübertragungseinrichtung nach Anspruch 8, **dadurch gekennzeichnet, dass** die Kopplungsfinger (91-94) in Umfangsrichtung jeweils zwischen zwei Kopplungselementen (81-88) angeordnet sind, die von der Nabe (22) ausgehen.

10. Drehmomentübertragungseinrichtung nach einem der vorhergehenden Ansprüche, **dadurch gekennzeichnet, dass** an der Dämpfernabe (38) ein Dämpfernabenflansch (35) befestigt ist.

11. Drehmomentübertragungseinrichtung nach Anspruch 10, **dadurch gekennzeichnet, dass** der Dämpfernabenflansch (35) stoffschlüssig mit der Dämpfernabe (38) verbunden ist.
